# EUROPÄISCHE PATENTSCHRIFT

(11) **EP 3 100 604 B1**
(45) Veröffentlichungstag und Bekanntmachung des Hinweises auf die Patenterteilung: **03.11.2021**
(21) Anmeldenummer: 16171354.0
(22) Anmeldetag: 25.05.2016
(51) Int. Cl.: A01C 7/10, A01C 21/00

(54) **VERFAHREN ZUR REGELUNG EINER DOSIEREINHEIT ZUR DOSIERUNG VON GRANULATARTIGEM VERTEILGUT SOWIE DOSIEREINHEIT HIERFÜR**
METHOD FOR CONTROLLING A DOSING UNIT FOR DOSING GRANULATE DISTRIBUTED GOODS AND DOSING UNIT FOR SAME
PROCEDE DE REGLAGE D'UNE UNITE DE DOSAGE DE PRODUIT A EPANDRE SOUS FORME DE GRANULES ET UNITE DE DOSAGE ASSOCIEE

(30) Priorität: 02.06.2015 DE 102015210201
(43) Veröffentlichungstag der Anmeldung: 07.12.2016
(73) Patentinhaber: Horsch Maschinen GmbH, 92421 Schwandorf (DE)
(72) Erfinder: ROTHMUND, Matthias, 92421 Schwandorf (DE)
(74) Vertreter: Benninger, Johannes

(56) Entgegenhaltungen:
- CA-C- 1 338 316
- US-A- 5 323 721
- US-A1- 2006 011 647

## Beschreibung

Die vorliegende Erfindung betrifft ein Verfahren zur Regelung einer Dosiereinheit zur Dosierung von granulatartigem Verteilgut mit den Merkmalen des unabhängigen Verfahrensanspruchs 1, insbesondere zur Dosierung von körnigem Saatgut, Dünger o.dgl. Zudem betrifft die Erfindung eine Dosiereinheit mit den Merkmalen des unabhängigen Anspruchs 13 die zur Dosierung von granulatartigem Verteilgut, insbesondere von Saatgut oder Dünger vorgesehen ist.

Bei Verteilvorrichtungen wie Sämaschinen ist eine exakte Dosierung und Ausbringung des Verteilgutes nicht nur im Interesse einer möglichst gleichmäßigen Verteilung wünschenswert, sondern sie dient auch einer Kostenersparnis, da bspw. der optimale Feldaufgang bei Getreide von der exakten Einhaltung einer bestimmten Ausbringmenge je Flächeneinheit abhängig ist. Die Erfassung der Verteilgutdichte in leitungsgeführten Luftströmen bzw. die Anzahl des passierenden Verteilguts je Zeiteinheit kann über Sensoreinheiten erfolgen.

So offenbart die EP 2 932 818 A1 beispielsweise eine Verteilvorrichtung sowie ein Verfahren zur Ausbringung von granulatartigem Verteilgut. Die Verteilvorrichtung dient insbesondere zur Verteilung und/oder Ausbringung von granulatartigem Verteilgut, wie Saatgut, Dünger o. dgl. auf Ausbringflächen wie landwirtschaftlichen Nutzflächen, Äckern etc. und kann insbesondere durch eine Sämaschine, welche durch eine Zugmaschine gezogen wird, gebildet sein. Mittels einer Dosiereinheit mit rotierendem Dosierelement kann eine steuerbare Zuteilung des Verteilguts vorgenommen werden. Über eine Verteileinheit wird das Verteilgut aufgeteilt und mittels eines Luftstroms über Verbindungsleitungen einer bestimmten Anzahl an Ausbringeinrichtungen zugeleitet. Im Bereich der Verteileinheit und/oder innerhalb einer Verbindungsleitung ist mindestens eine Sensoreinheit zur Erfassung weitgehend aller im Luftstrom getragenen und die jeweilige Sensoreinheit passierenden Verteilgutmengen bzw. eines Anteils der Verteilgutmenge angebracht. Das Verteilgut, welches die Sensoreinheit passiert, erzeugt jeweils ein Sensorsignal, welches die Anzahl der je Zeiteinheit passierenden und auf die Sensoreinheit einwirkenden Körner anzeigt. Die Sensoreinheit ist außerdem mit einer Regel- und/oder Steuereinheit signaltechnisch verbunden. Aus den erfassten Körnern bzw. dem Anteil der Verteilgutmenge kann über die Regel- und/oder Steuereinheit die Gesamtverteilgutmenge ermittelt werden, welche die Dosiereinheit in einer Umdrehung ausdosiert. Weiterhin ist die Sensoreinheit signaltechnisch mit einer Einrichtung zur Variation des Luft- und/oder Kornvolumenstroms gekoppelt und/oder beeinflusst deren Durchflussstellung. Die Ausbringmenge kann somit an veränderte Umstände angepasst sowie eine vorfahrtsgeschwindigkeitsabhängige Drehzahlregelung der Dosiereinheit vorgenommen werden. Dennoch ist dieser Vorgang oftmals mit einer großen Anzahl an betriebszustandsabhängigen Regelungsvorgängen verbunden, welche unter anderem durch den Führer der Zugmaschine, an welche die Verteilvorrichtung angebracht ist, ausgeführt werden müssen. Oftmals wird auch eine Regelung der Dosiereinrichtung vorgenommen, welche nicht optimal zu dem aktuellen Betriebszustand passt. Je nach gegebenen Betriebszustand muss eine schnelle Anpassung der Regelung bzw. eine neue Kalibrierung der Dosiereinheit vorgenommen werden.

Durch CA 1 338 316 C ist eine Einzelkornmaschine mit einem Sensorsystem zur Überwachung der Ausbringung von Körnern offenbart. Im Rahmen eines Kalibrierungsmodus wird ein Referenzwert für auszubringende Körner generiert bzw. festgelegt, welcher Referenzwert anschließend für die Regelung der Dosiereinheit herangezogen wird. Das Dokument US 2006/011647 offenbart ein Verfahren und eine Vorrichtung zum Testen verschiedener Dosiereinheiten.

Das vorrangige Ziel der vorliegenden Erfindung besteht darin, ein Verfahren bereit zu stellen, mittels welchem eine schnelle Regelung einer Dosiereinheit zur Dosierung von granulatartigem Verteilgut vorgenommen, die Kalibrierung der Dosiereinheit an einen gegebenen Betriebszustand angepasst sowie der Anpassungsvorgang erleichtert und vereinfacht werden kann. Mit Hilfe des verbesserten Regelungsverfahrens soll die Anpassungsfähigkeit der Regelungsparameter an unterschiedliche Bedingungen verbessert und insbesondere die Aggressivität in der Regelung, d.h. die schnelle Reaktion an sich ändernde Parameter, erhöht werden.

Um das oben genannte Ziel der Erfindung zu erreichen, wird ein Verfahren zur Regelung einer Dosiereinheit zur Dosierung von granulatartigem Verteilgut mit den Merkmalen des Anspruchs 1 vorgeschlagen. Weitere vorteilhafte Ausgestaltungen werden durch die Unteransprüche beschrieben.

Das mit der Erfindung zur Verfügung gestellte Verfahren zur Regelung einer drehbaren Dosiereinheit eignet sich dabei insbesondere für eine Dosiereinheit zur Dosierung von körnigem Saatgut, Dünger o. dgl., welche insbesondere bei Verteil- oder Sävorrichtungen zum Einsatz gebracht werden kann. Daher schlägt die Erfindung ebenfalls eine solche Dosiereinheit vor. Die Verteil- oder Sävorrichtung weist idealerweise eine Luftfördereinheit zur Erzeugung eines Luftvolumenstroms auf, der die Dosiereinheit zur steuerbaren, insbesondere zur volumetrischen Zuteilung des Verteilguts zum Luftvolumenstrom zu- oder nachgeordnet ist. Außerdem ist wenigstens eine Verteileinheit zur Aufteilung des das Verteilgut tragenden Luftvolumenstroms von wenigstens einer Haupt- oder Speiseleitung zu einer Mehrzahl von Verbindungsleitungen vorgesehen. Die Verbindungsleitungen führen jeweils zu einzelnen Säscharen oder anderen bodennah angeordneten oder im Boden geführten Ausbringeinrichtungen für das Verteilgut. Im Bereich der Verteileinheit und/oder innerhalb eines Verbindungsabschnittes wenigstens einer der von der Verteileinheit mündenden Verbindungsleitungen ist mindestens eine Sensoreinheit zur Erfassung weitgehend aller im Luftstrom bzw. im jeweiligen Teilstrom getragenen und diese Sensoreinheit passierenden Körner des Verteilguts angeordnet. Die wenigstens eine Sensoreinheit kann insbesondere nach einem piezoelektrischen Sensorprinzip arbeiten und dadurch alle im Luftstrom getragenen und die Sensoreinheit passierenden Körner durch mechanische Einwirkung erfassen und entsprechende Sensorsignale erzeugen, welche die Anzahl der je Zeiteinheit eines Messintervalls passierenden und auf die Sensoreinheit einwirkenden Körner anzeigen.

Über die wenigstens eine Sensoreinheit wird somit wenigstens ein Anteil einer Verteilgutmenge, welcher zu wenigstens einer Ausbringeinrichtung geleitet wird, innerhalb eines bestimmten Messintervalls erfasst. Über wenigstens den Anteil der Verteilgutmenge kann die Gesamtverteilgutmenge ermittelt werden, welche die Dosiereinheit innerhalb des bestimmten Messintervalls ausgibt. Die wenigstens eine Sensoreinheit ist mit einer Steuer- und/oder Regeleinheit bzw. mit einer Rechner- und/oder Auswerteinheit verbunden, mittels welcher die Regelung und Kalibrierung der Dosiereinheit vorgenommen werden kann, um die Ausbringmenge der Dosiereinheit pro Umdrehung an den aktuellen Betriebszustand anzupassen sowie eine von einer Vorfahrtsgeschwindigkeit abhängige Drehzahlregelung der Dosiereinheit zu ermöglichen.

Die Steuer- und/oder Regeleinheit bzw. die Rechner- und/oder Auswerteinheit verfügt über wenigstens zwei vorgegebene Parametersätze zur Regelung der Dosiereinheit, welche jeweils aus wenigstens einem Parameter bestehen. Mittels der wenigstens zwei Parametersätze kann die Erfassung wenigstens des Anteils der Verteilgutmenge parametriert werden. Die wenigstens zwei Parametersätze werden für den Ermittlungsprozess der Gesamtgutverteilmenge, welche die Dosiereinheit in einer bestimmten Anzahl an Umdrehungen abgibt, genutzt.

Bei einem bestimmten ersten Betriebszustand wird ein erster Parametersatz angewendet. Der erste Parametersatz umfasst dabei ein erstes Messintervall. Die Regelung der Dosiereinrichtung wird standardmäßig an den ersten Betriebszustand angepasst. Bei Erreichen eines wenigstens zweiten Betriebszustands wird zu dem wenigstens zweiten Parametersatz gewechselt. Der wenigstens zweite Parametersatz umfasst ein wenigstens zweites Messintervall, welches kürzer ist als das erste Messintervall. Die Regelung der Dosiereinrichtung wird dabei dem wenigstens zweiten Betriebszustand angepasst. Dabei ist insbesondere wichtig, dass die Neuregelung der Dosiereinheit mit einer gewissen Aggressivität in der Regelung vorgenommen wird, um die Reaktionsgeschwindigkeit des Vorgangs zu erhöhen. Mit dem Begriff der Aggressivität ist in diesem Zusammenhang gemeint, dass eine sehr schnelle Regelung durchgeführt wird, bei der die Ausgangswerte in sehr kurzer Zeit große Abweichungen oder Änderungen erfahren können, im Gegensatz zu einer eher trägen Regelung, die für manche Einsatzzwecke keine ausreichend schnelle Anpassung der Ausgangswerte liefern kann.

Nach bestimmten Einflussfaktoren, umfassend den Ablauf einer bestimmten Intervalllänge und/oder den Ablauf einer bestimmten Anzahl an Messintervallen und/oder das Einsetzen des ersten Betriebszustandes, was beispielsweise anhand verschiedener Messwerte von der Regel- und/oder Steuereinrichtung erkannt werden kann, wird wiederum zu dem ersten Parametersatz gewechselt. Dadurch ist kein manuelles Eingreifen in die Regelung der Dosiereinheit mehr notwendig. Die Regelung der Dosiereinheit erfolgt automatisch.

Der erste Betriebszustand wird durch einen oder mehrere Standardzustände definiert. Ein Standardzustand stellt erfindungsgemäß einen Zustand während eines geregelten Ausbringvorgangs einer Feldfahrt, umfassend geringere Fahrgeschwindigkeitsänderungen, dar. Der zweite Betriebszustand wird durch einen Zustand gebildet, welcher sich von dem Standardzustand unterscheidet. Dies kann zum Beispiel durch einen Neustart des Zugfahrzeugs und/oder des Programms bzw. die Software, über welche die Verteilvorrichtung steuerbar ist, oder durch eine Arbeitsunterbrechung herbeigeführt werden. Dabei kann eine Mindestdauer einer Arbeitsunterbrechung definiert werden. Auch ein Wechsel der Art des granulatartigen Verteilguts und/oder ein Wechsel der Dosiereinheit, beispielsweise aufgrund eines Wechsels des Verteilguts, führen zu einer Abweichung von dem ersten Betriebszustand, und gehören deshalb dem zweiten Betriebszustand an.

Die Dauer eines bestimmten Messintervalls kann beispielsweise anhand einer bestimmten Zeiteinheit und/oder einer bestimmten Anzahl an Umdrehungen der Dosiereinheit festgelegt werden. Der erste Parametersatz umfasst dabei ein erstes bestimmtes Messintervall, der wenigstens zweite Parametersatz umfasst ein wenigstens zweites Messintervall, das aufgrund der notwendigen Neuanpassung durch die oben genannten Zustände des zweiten Betriebszustandes kürzer bemessen wird als das erste Messintervall.

Ein kurzes Messintervall bringt den Vorteil mit sich, dass durch die kurze Messdauer schnell auf eine veränderte Situation reagiert werden kann. Dies ist für einige Situationen, auf welche kurzfristig reagiert werden muss, wie Neustart und/oder Arbeitsunterbrechung, zwar sinnvoll, kann allerdings auch zu einem unruhigen Verhalten der Regelung der Dosiereinheit führen. Ein langes Messintervall bewirkt eine ruhige Regelung, welche insbesondere in Standardzuständen bei der Feldfahrt erwünscht ist, allerdings kann dadurch langsamer auf einen veränderten Betriebszustand reagiert werden. Um jeweils die Vorteile von kurzen und langen Messintervallen zu nutzen, wird dem Parametersatz des ersten Betriebszustands ein erstes, langes Messintervall zugeordnet, da hier im Normalfall keine kurzfristige Regelung der Dosiereinheit notwendig ist. Dem wenigstens zweiten Parametersatz des wenigstens zweiten Betriebszustands wird ein zweites, kurzes Messintervall zugeordnet. Hier ist eine kurzfristige Änderung der Regelung wichtig. Ein Messintervall kann sich auf eine Länge von 1 bis 10 Zeiteinheiten und/oder Umdrehungen der Dosiereinheit erstrecken, bestenfalls aber auf eine Länge von 1 bis 5 Zeiteinheiten und/oder Umdrehungen der Dosiereinheit. Ein langes Messintervall kann dabei 4 bis 10, bestenfalls aber 5 Zeiteinheiten und/oder Umdrehungen der Dosiereinheit umfassen, ein kurzes Messintervall 1 bis 5, bestenfalls aber 1 Zeiteinheit und/oder Umdrehung der Dosiereinheit.

Neben dem Parameter der Länge eines Messintervalls können zudem die Parameter Zählverzögerung und/oder Aggressivität und/oder zulässige Messwertabweichung einem Parametersatz zugeführt werden. Der Parameter Zählverzögerung definiert den Zeitversatz zwischen dem Dosiervorgang des Verteilguts in der Dosiereinheit und dem Zählvorgang an der wenigstens einen Sensoreinheit. Bei dem Wert der Zeitverzögerung kann es sich beispielsweise um einen Defaultwert handeln, welcher als eine feste Voreinstellung bereitgestellt werden kann. Ein Idealwert kann auch automatisch durch die Regel- und/oder Steuereinheit berechnet werden. Im Normalfall wird der Wert der Zeitverzögerung nicht verändert und kann bei allen Parametersätzen denselben Wert umfassen. Beispielsweise kann die Zeitverzögerung auf einen Defaultwert von 2 Sekunden festgelegt oder automatisch ein Idealwert berechnet werden.

Der Parameter Aggressivität bestimmt den Gewichtungsfaktor eines neu ermittelten Reglerwerts, also des Reglerwerts, welcher die Verteilgutmenge pro Umdrehung der Dosiereinheit angibt, gegenüber dem alten Reglerwert, welcher dem neu ermittelten Reglerwert vorangeht. Wird eine niedrige Einstellung der Aggressivität gewählt, kann dies dazu führen, dass sich, wenn nach einer Änderung des Betriebszustands ein unzulässiger Reglerwert bereit gestellt wird, eine betriebszustandsgemäße Regelung der Dosiereinheit langsamer einstellt. Bei einer hohen Aggressivität werden kleinere Schwankungen in einem Betriebszustand, beispielsweise abrupte Änderungen der Fahrgeschwindigkeit, weniger ausgeglichen. Wird beispielsweise ein Gewichtungsfaktor der Aggressivität von 70% gewählt, bedeutet dies, dass der alte Reglerwert der Verteilgutmenge pro Umdrehung, welcher dem neuen Reglerwert vorangeht, einen Gewichtungsfaktor von 30% erhält, der neu ermittelte Reglerwert der Verteilgutmenge pro Umdrehung einen Gewichtungsfaktor von 70%.

Der Parameter zulässige Messwertabweichung bestimmt, ob ein neu ermittelter Reglerwert der Verteilgutmenge pro Umdrehung eine vernachlässigbare Abweichung eines Reglerwerts gegenüber dem vorherigen Reglerwert darstellt und unverändert genutzt werden kann, oder ob der Reglerwert eine unverhältnismäßig und unzulässig hohe Abweichung besitzt, und bei einem niedrigeren Reglerwert abgeschnitten werden muss, so dass dieser eine reduzierte Abweichung zu den vorherigen Messwerten aufweist. Dieser neue Messwert kann anschließend in den Regelungsprozess einfließen, wodurch sich eine weniger hohe Abweichung des Reglerwerts ergibt. Dadurch kann eine störungsfreie und betriebszustandsgemäße Regelung gewährleistet werden. Eine Einstellung der Messwertabweichung von 50% bedeutet beispielsweise, dass ein ermittelter Reglerwert, welcher 70% über dem zuvor ermittelten Reglerwert der Verteilgutmenge pro Umdrehung liegt, lediglich als ein Reglerwert weiterverrechnet wird, welcher 50% über dem zuvor ermittelten Reglerwert liegt.

Um eine optimale Anpassung an einen neuen Betriebszustand zu gewährleisten, kann beispielsweise der wenigstens zweite Parametersatz, welcher bei einem zweiten Betriebszustand angewandt wird, fest vordefiniert und nicht variabel gestaltet werden. Der erste Parametersatz kann dabei idealerweise teilweise variabel definiert werden. Hier sind beispielsweise die Parameter Messintervall und/oder Zählverzögerung fest definiert, beziehungsweise werden automatisch ermittelt. Zulässige Messwertabweichung und/oder Aggressivität können variabel eingestellt werden. Denkbar ist auch, die Parameter zulässige Messwertabweichung und/oder Aggressivität zusammen zu fassen und unterschiedliche Einstellungsstufen der beiden Parameter bereit zu stellen.

Als eine beispielhafte Ausführung wäre es denkbar, zwei Parametersätze für zwei unterschiedliche Betriebszustände zu definieren. Dabei wird ein erster Parametersatz bereitgestellt, welcher bei einem ersten Betriebszustand angewandt wird. Der erste Betriebszustand umfasst den Standartbetriebszustand, welcher während eines geregelten Ausbringvorgangs einer Feldfahrt vorhanden ist. Dabei umfasst der Parametersatz, welcher den Standard-Parametersatz definiert, die Parameter Messintervall, Zählverzögerung, Aggressivität und zulässige Messwertabweichung, welche beispielsweise durch die sinnvollen Werte
- Messintervall: 5 Sekunden,
- Zählverzögerung: 2 Sekunden,
- Aggressivität: 70% und
- zulässige Messwertabweichung: 50%
gebildet sein können. Der erste Parametersatz ist während des ersten Betriebszustands aktiv. Solange die geregelte Feldfahrt aufrechterhalten wird, erfolgt eine Regelung nach dem ersten Parametersatz. Hierbei ist ein Messintervall von bspw. fünf Sekunden ausreichend, da ein möglichst ruhiges Regelungsverhalten gewünscht wird. Die geeignete Zählverzögerung für den ersten Betriebszustand wird bereits im Vorfeld automatisch von der Steuer- und/oder Regeleinrichtung ermittelt und auf zwei Sekunden festgelegt. Die Aggressivität von 70% führt zu einer langsameren Einstellung eines neuen Kalibrierwerts. Die niedrige zulässige Messwertabweichung von 50% bewirkt eine Vermeidung von unzulässig hohen Reglerwerten.

Bei Änderung des ersten Betriebszustands zu einem zweiten Betriebszustand, welcher die Zustände Neustart des Zugfahrzeugs und/oder des Programms, Arbeitsunterbrechung, Wechsel der Art des granulatartigen Verteilguts oder Wechsel der Dosiereinheit umfasst, erfolgt ein Wechsel zu dem zweiten Parametersatz. Die Parameter des zweiten Parametersatzes können bspw. durch die sinnvollen Werte
- Messintervall: 1 Sekunde,
- Zählverzögerung: 2 Sekunden,
- Aggressivität: 80% und
- zulässige Messwertabweichung: 80%
definiert sein. Die Parameter des zweiten Parametersatzes sind vorzugsweise so gewählt, dass eine kurzfristige Neuregelung der Dosiereinrichtung, passend zu dem geänderten Betriebszustand, ermöglicht wird. Das Messintervall verfügt hier über eine Länge von einer Sekunde, da ein schnelles Erfassen des Anteils des Verteilguts erwünscht ist, um kurzfristig die Regelung an ein neues Arbeitsumfeld anpassen zu können. Auch hier wird automatisch eine Zählverzögerung von zwei Sekunden eingestellt. Die Aggressivität von 80% bewirkt eine geringere Ausgleichung von kleineren Schwankungen beispielsweise nach abrupten Geschwindigkeitswechseln. Die zulässige Messwertabweichung ist bei 80% gewählt. Dadurch werden auch Reglerwerte erfasst und verarbeitet, welche stark von vorhergehenden Reglerwerten abweichen. Der zweite Parametersatz ist so lange aktiv, bis eine bestimmte Intervalllänge und/oder eine bestimmte Anzahl an Messintervallen verstrichen sind, bzw. in den ersten Betriebszustand gewechselt wird. Anschließend erfolgt wiederum eine Anwendung des ersten Parametersatzes.

Es sei in diesem Zusammenhang betont, dass die oben angegebenen Werte für den ersten und zweiten Parametersatz lediglich beispielhaft zu verstehen sind und in der Praxis in weitem Umfang, je nach Zweckmäßigkeit und angestrebtem Regelverhalten, variiert werden können.

Denkbar ist außerdem eine Vorgehensweise, bei welchem der zweite Betriebszustand den Ausgangszustand darstellt, und anschließend in den ersten Betriebszustand gewechselt wird.

Rein vorsorglich sei darauf hingewiesen, dass die für die zentrale Rechner- und/oder Auswerteinheit verwendete Begrifflichkeit umfassend zu verstehen ist. Diese Einheit kann gleichermaßen als Steuer- und/oder Regeleinheit bezeichnet werden, ohne dass damit eine grundsätzlich andere Funktion oder grundsätzlich andere Aufgaben verbunden sind. Wenn also im vorliegenden Zusammenhang von einer Steuer- und/oder Regeleinheit die Rede ist, so kann generell immer auch eine Rechner- und/oder Auswerteinheit gemeint sein; die Begrifflichkeiten können somit als Synonyme verstanden und gegeneinander ausgetauscht werden. Das betrifft sowohl die vorliegende Beschreibung als auch die Ansprüche sowie die nachfolgende Erläuterung verschiedener Ausführungsbeispiele der Erfindung.

Das erfindungsgemäße Verfahren und die erfindungsgemäße Dosiereinrichtung kommen insbesondere im Bereich der Landwirtschaft zur Anwendung und sind insofern gewerblich anwendbar.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer Verteilmaschine, an welcher das erfindungsgemäße Verfahren angewendet werden kann.
Fig. 2 zeigt anhand eines schematischen Blockschaltbildes die Zusammenwirkungen der Steuer- und/oder Regeleinrichtung des erfindungsgemäßen Verfahrens.
Fig. 3 zeigt beispielhaft einen schematischen Verfahrensablauf innerhalb des erfindungsgemäßen Verfahrens.
Fig. 4 zeigt beispielhaft ein Ausführungsbeispiel des erfindungsgemäßen Verfahrens anhand eines schematischen Verfahrensablaufs.
Fig. 5 zeigt ein weiteres Ausführungsbeispiel des erfindungsgemäßen Verfahrens anhand eines schematischen Verfahrensablaufs.

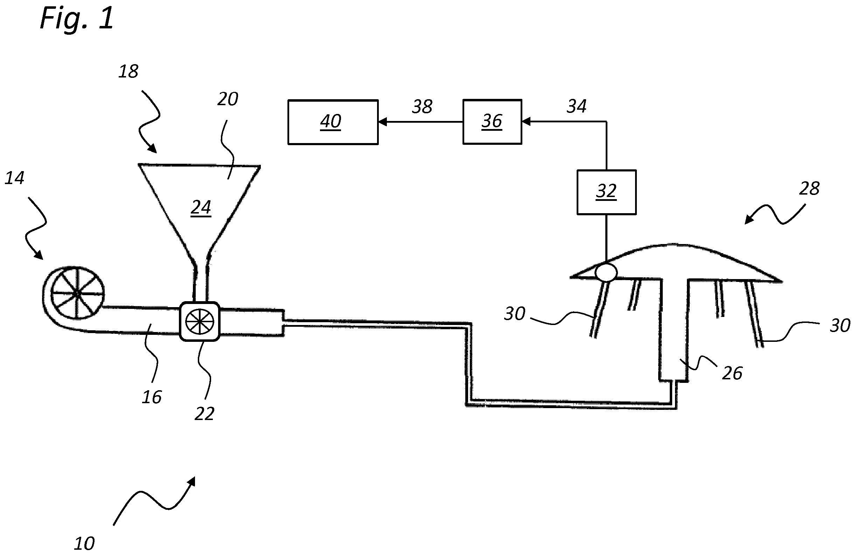

Für gleiche oder gleich wirkende Elemente der Erfindung werden in den nachfolgend beschriebenen Figuren 1 bis 5 jeweils gleiche Bezugsziffern verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Verfahren ausgestaltet sein kann und stellen keine abschließende Begrenzung dar.

Die Fig. 1 zeigt in schematischer Weise den typischen Aufbau einer landwirtschaftlichen Verteilmaschine, an welcher das Verfahren der vorliegenden Erfindung zur Anwendung kommen kann. Diese landwirtschaftliche Verteilmaschine - nachfolgend auch als Verteilvorrichtung 10 bezeichnet - kann insbesondere eine pneumatisch arbeitende Drillmaschine, eine Verteilmaschine zum Ausbringen von granulatartigem Dünger etc. sein.

So umfasst die schematisch gezeigte Verteilvorrichtung 10 eine Luftfördereinheit 14, insbesondere in Form eines Zentralgebläses, die/das der Erzeugung eines zentralen Luftförderstroms in einer Luftleitung 16 dient. Dieser zumindest abschnittsweise annähernd horizontal verlaufenden Luftleitung 16 ist räumlich ein trichterförmiger Saatgutvorrat 18 oder ein Vorrat für Dünger o. dgl. zugeordnet, der an seiner tiefsten Stelle eines Trichters 20 in eine innerhalb der Luftleitung 16 angeordnete Dosiereinheit 22 mündet, mit welcher das granulatartige Verteilgut 24 bzw. das Saatgut oder der Dünger dem von der Luftfördereinheit 14 erzeugten Luftvolumenstrom zudosiert wird, so dass dieser im weiteren Förderverlauf als Trägermedium für das mittransportierte granulatartige Verteilgut 24 bzw. Saatgut fungiert.

Die Luftleitung 16 mündet in einem der Dosiereinheit 22 nachgeordneten Abschnitt in eine Steigleitung 26. Die Steigleitung 26 weist normalerweise einen zumindest abschnittsweise vertikalen Verlauf auf und mündet an ihrem oberen Ende in einer zentralen Verteileinheit 28, die für eine Umlenkung des Luftvolumenstroms mitsamt dem mitgetragenen Verteilgut 24 in eine Mehrzahl von horizontal oder schräg nach unten verlaufenden Verbindungsleitungen 30 sorgt. Die Verbindungsleitungen 30 führen jeweils zu einzelnen Säscharen oder anderen bodennah angeordneten oder im Boden geführten Ausbringeinrichtungen für das granulatartige Verteilgut bzw. Saatgut, die jedoch in der Fig. 1 nicht dargestellt sind.

Die Fig. 1 lässt außerdem einige Komponenten des nachfolgend näher zu beschreibenden erfindungsgemäßen Verfahrens erkennen, welche dort schematisch angedeutet sind. Bei diesen weiteren Komponenten handelt es sich um wenigstens eine Sensoreinheit 32, die typischerweise in der zentralen Verteileinheit 28 angeordnet sein kann, normalerweise jedoch einer einzelnen Verbindungsleitung 30 zugeordnet ist. Wahlweise kann auch mehreren oder allen dieser Verbindungsleitungen 30 jeweils eine separate Sensoreinheit 32 zugeordnet sein. Die Sensoreinheit 32 bzw. die Mehrzahl von Sensoreinheiten 32 in der Verteileinheit und/oder in den Verbindungsleitungen 30 dienen der quantitativen Erfassung weitgehend aller im Luftstrom bzw. im jeweiligen Teilstrom getragenen und diese Sensoreinheit 32 passierenden Körner des Verteilguts 24, so dass damit eine zuverlässige Messung des zu den Säscharen oder Ausbringeinrichtungen geförderten granulatartigen Verteilguts 24 oder Saatguts ermöglicht ist. Weiterhin liefert die wenigstens eine Sensoreinheit 32 bzw. die Mehrzahl von Sensoreinheiten 32 ihre Ausgangssignale 34 jeweils an eine Rechner- und Auswerteinheit 36, die aus den Werten eine sinnvolle Stellgröße 38 für wenigstens eine Einrichtung 40 zur betriebszustandsgemäßen Regelung bzw. Kalibrierung der Dosiereinrichtung 22 erzeugt.

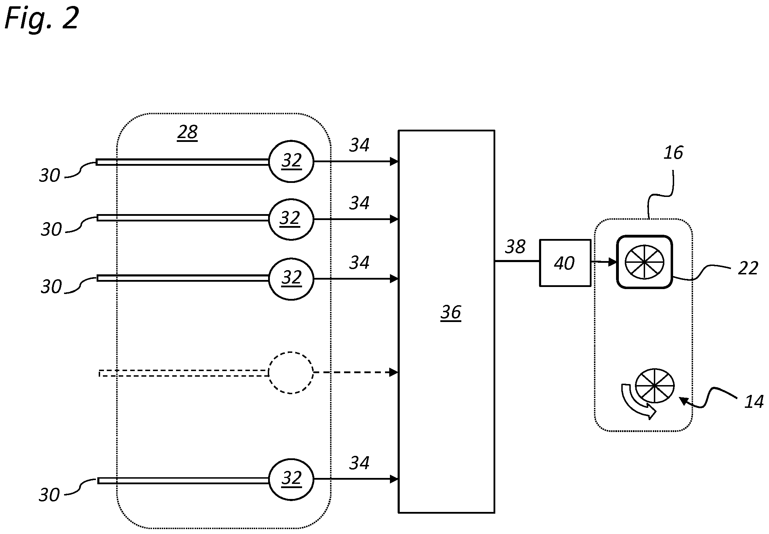

Die Fig. 2 zeigt anhand eines schematischen Blockschaltbildes die sinnvollen Zusammenwirkungen der Steuer- und/oder Regeleinrichtung in Form einer Rechner- und Auswerteinheit mit der Sensoreinheit 32 bzw. der Mehrzahl an Sensoreinheiten 32 und der Dosiereinheit 22 gemäß einer Ausführungsvariante des erfindungsgemäßen Verfahrens.

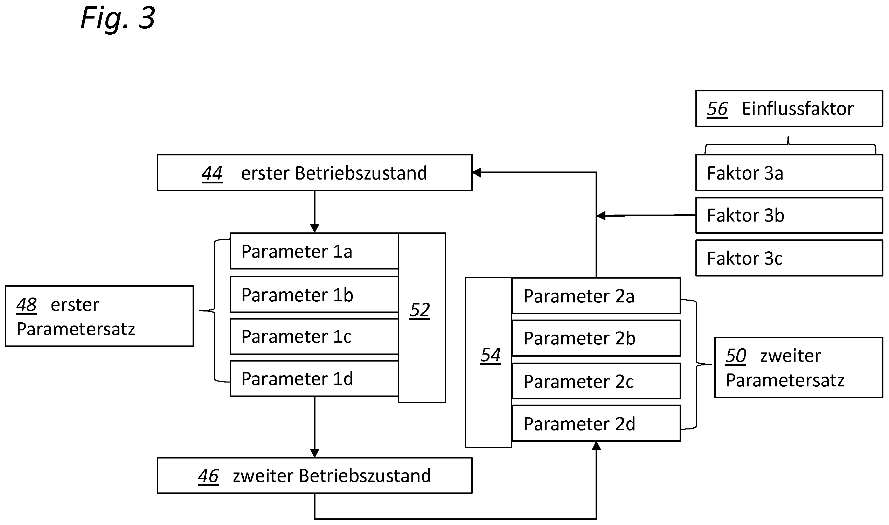

In der Fig. 2 ist eine Mehrzahl von Sensoreinheiten 32 zu erkennen; diese Sensoreinheiten 32 sind jeweils innerhalb der Verteileinheit 28 angeordnet. Jede dieser separaten Sensoreinheiten 32 ist vorzugsweise so angeordnet, dass die geförderten Kornmengen in jeder einzelnen Verbindungsleitung 30 erfasst werden können, welche die einzelnen Sensoren 32 passieren. Die Anordnung der Sensoreinheiten 32 innerhalb der Verteileinheit 28 charakterisiert die räumliche und bauliche Zuordnung der Sensoreinheiten 32, die jeweils einen konstruktiven Bestandteil der Verteileinheit 28 bilden. Die Ausganssignale 34 der einzelnen Sensoreinheiten 32 werden in der zentralen Rechner- und Auswerteeinheit 36 erfasst und zur Berechnung von sinnvollen Ausgangssignalen 40 verwendet. Anhand der Ausgangssignale 40 kann die Dosiereinheit 22 gemäß der Betriebszustände 44 und 46 (vgl. Fig. 3) geregelt bzw. kalibriert werden.

Die Fig. 3 zeigt beispielhaft einen schematischen Verfahrensablauf, der das erfindungsgemäße Verfahren zur Regelung einer Dosiereinheit 28 zur Dosierung von granulatartigem Verteilgut 24 nochmals veranschaulichen und in verschiedenen Betriebszuständen darstellen soll. Gemäß dem Verfahren wird während des Einsatzes der Dosiereinheit 22 ein erster Betriebszustand 44, umfassend einen Standardzustand eines geregelten Ausbringvorgangs einer Feldfahrt, und ein zweiter Betriebszustand 46, welcher sich aus den Zuständen "Neustart des Zugfahrzeugs" und/oder "Neustart des Programms", "Arbeitsunterbrechung", "Wechsel der Art des granulatartigen Verteilguts" oder "Wechsel der Dosiereinheit" definiert, erfasst. Während des ersten Betriebszustands 44 wird von der zentralen Rechner- und Auswerteeinheit 36 ein erster Parametersatz 48 gewählt, um eine betriebszustandsgemäße Erfassung wenigstens eines Anteils des Verteilguts 28, welcher die Sensoreinheit 32 bzw. die Mehrzahl der Sensoreinheiten 32 passiert, zu regeln. Der erste Parametersatz 48 umfasst die Parameter 1a, 1b, 1c, sowie 1d, welche unter der Bezugsziffer 52 zusammengefasst sind. Der erste Parametersatz 48 ist solange aktiv, bis ein Zustand gemäß zweitem Betriebszustands 46 eintritt. In diesem Fall wird von der zentralen Rechner- und Auswerteeinheit 36 ein zweiter Parametersatz 50 zur Erfassung wenigstens eines Anteils des Verteilguts 28 gemäß zweitem Betriebszustands 46 gewählt. Der zweite Parametersatz 50 nutzt die Parameter 2a, 2b, 2c sowie 2d, welche unter der Bezugsziffer 54 zusammengefasst sind. Der zweite Parametersatz 50 ist solange aktiv, bis einer der Einflussfaktoren 56, welche sich aus den Faktoren 3a, 3b und 3c zusammensetzen, relevant wird bzw. eintritt. Bei den Einflussfaktoren 56 kann es sich um die Faktoren "Verstreichen einer bestimmten Intervalllänge" bzw. "Verstreichen einer bestimmten Anzahl an Messintervallen" oder "Wechsel in den ersten Betriebszustand 44" handeln, was beispielsweise anhand verschiedener Messwerte von der Regel- und/oder Steuereinrichtung erkannt werden kann. Sobald einer der genannten Einflussfaktoren 56 relevant wird bzw. eintritt, wird unmittelbar bzw. mit geringer Verzögerung in den ersten Betriebszustand 44 gewechselt und gleichzeitig der erste Parametersatz 48 aktiviert.

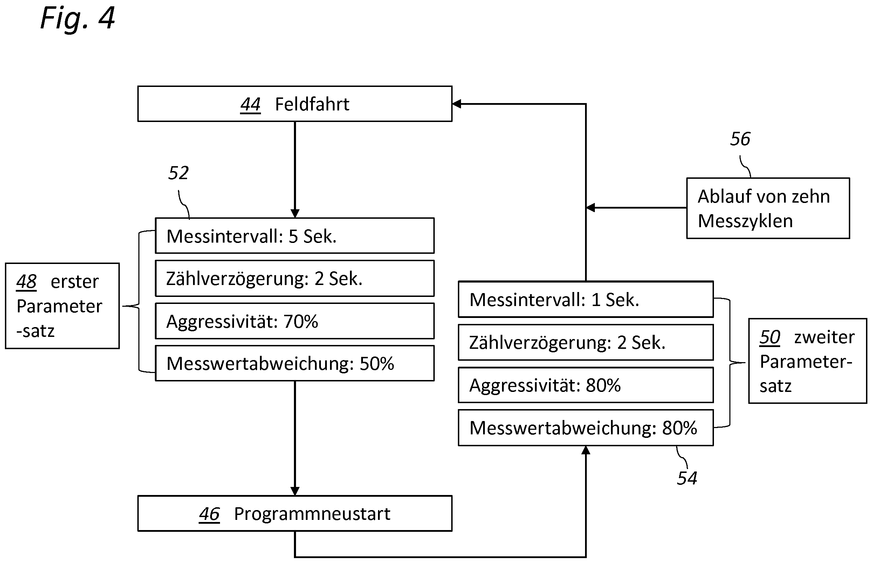

Das Blockschaltbild der Fig. 4 stellt das erfindungsgemäße Verfahren zur Regelung einer Dosiereinheit 28 zur Dosierung von granulatartigem Verteilgut 24 anhand eines konkreten Ausführungsbeispiels nochmals dar. Gemäß dem erfindungsgemäßen Verfahren wird während des ersten Betriebszustands 44, welcher eine standardgemäße Feldfahrt darstellt, eine Dosiereinheit 22, geregelt durch den ersten Parametersatz 48, welcher den Standard-Parametersatz 48 definiert, eingesetzt. Die zentrale Rechner- und Auswerteeinheit 36 wählt den Standard-Parametersatz 48, welcher durch die Parameter 52 (Messintervall, Zählverzögerung, Aggressivität und Messwertabweichung) gebildet wird. Dabei werden den Parametern 52 die exakten Werte
- Messintervall: 5 Sekunden,
- Zählverzögerung: 2 Sekunden,
- Aggressivität: 70% und
- zulässige Messwertabweichung: 50%
zugeordnet. Solange die Feldfahrt aufrechterhalten wird, ist der erste Parametersatz 48 aktiv. Hierbei ist ein Messintervall von fünf Sekunden ausreichend, da ein möglichst ruhiges Regelungsverhalten gewünscht wird. Die geeignete Zählverzögerung für den ersten Betriebszustand 44 wird bereits im Vorfeld automatisch von der Rechner- und Auswerteeinheit 36 ermittelt. Die Aggressivität von 70% führt zu einer langsameren Einstellung eines neuen Kalibrierwerts. Die niedrige zulässige Messwertabweichung von 50% bewirkt eine Vermeidung von unzulässig hohen Reglerwerten.

Wird aufgrund einer Feldfahrtunterbrechung das Programm neu gestartet, fällt dies unter den zweiten Betriebszustand 46, wodurch eine Neubemessung der Erfassung wenigstens eines Anteils des Verteilguts 28 notwendig wird, da die Dosiereinheit 22 gegebenenfalls an eine neue Situation angepasst werden muss. Dadurch wird der zweite Parametersatz 50 zur Erfassung wenigstens eines Anteils des Verteilguts 28, welcher die Sensoreinheit 32 bzw. die Mehrzahl der Sensoreinheiten 32 passiert, aktiviert, welcher die Parameter 52
- Messintervall: 1 Sekunde,
- Zählverzögerung: 2 Sekunden,
- Aggressivität: 80% und
- zulässige Messwertabweichung: 80%
festlegt. Das Messintervall verfügt hier über eine Länge von einer Sekunde, da ein schnelles Erfassen des Anteils des Verteilguts erwünscht ist, um kurzfristig die Regelung an ein neues Arbeitsumfeld anpassen zu können. Auch hier wird automatisch eine Zählverzögerung von zwei Sekunden eingestellt. Die Aggressivität von 80% bewirkt eine geringere Ausgleichung von kleineren Schwankungen, beispielsweise nach abrupten Geschwindigkeitswechseln. Die zulässige Messwertabweichung ist bei 80% gewählt. Dadurch werden auch Reglerwerte erfasst und verarbeitet, welche stark von vorhergehenden Reglerwerten abweichen. Der zweite Parametersatz 50 ist bei dieser Vorgehensweise fest vordefiniert und nicht veränderbar. Bei dem ersten Parametersatz 48 können die Parameter 52 "Aggressivität" sowie "zulässige Messwertabweichung" gegebenenfalls variiert werden. Nach Ablauf eines Intervalls von z.B. zehn Messzyklen 56 ist das Arbeitsumfeld neu erfasst und es kann in den ersten Betriebszustand 44 zurückgekehrt werden, wobei wiederum der erste Parametersatz 48 aktiviert wird.

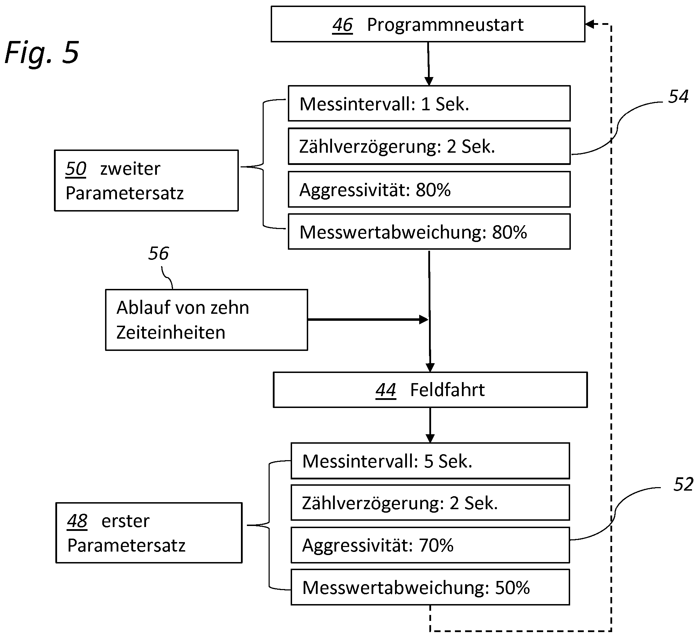

Das weitere Blockschaltbild der Fig. 5 verdeutlicht ein weiteres Ausführungsbeispiel des erfindungsgemäßen Verfahrens zur Regelung einer Dosiereinheit 22 zur Dosierung von granulatartigem Verteilgut 24. Zu Beginn des Ausbringvorgangs wird das Programm der Verteileinrichtung 10 (vgl. Fig. 1) gestartet. Dieser Betriebszustand fällt unter den zweiten Betriebszustand 46, wodurch eine Neubemessung der Erfassung wenigstens eines Anteils des Verteilguts 28 notwendig wird, da die Dosiereinheit 22 an eine neue Situation angepasst werden muss. Deshalb wird der zweite Parametersatz 50 zur Erfassung wenigstens eines Anteils des Verteilguts 28, welcher die Sensoreinheit 32 bzw. die Mehrzahl der Sensoreinheiten 32 passiert, aktiviert. Er verfügt über die Parameter 52
- Messintervall: 1 Sekunde,
- Zählverzögerung: 2 Sekunden,
- Aggressivität: 80% und
- zulässige Messwertabweichung: 80%.

Das Messintervall verfügt hier über eine Länge von einer Sekunde, da ein schnelles Erfassen des Anteils des Verteilguts erwünscht ist, um kurzfristig die Regelung an ein neues Arbeitsumfeld anpassen zu können. Die Zählverzögerung wird automatisch auf einen Wert von zwei Sekunden eingestellt. Die Aggressivität von 80% bewirkt eine geringere Ausgleichung von kleineren Schwankungen beispielsweise nach abrupten Geschwindigkeitswechseln. Die zulässige Messwertabweichung ist bei 80% gewählt. Dadurch werden auch Reglerwerte erfasst und verarbeitet, welche stark von den Reglerwerten abweichen, welche gegebenenfalls in dem ersten Betriebszustand 44 auftreten. Der zweite Parametersatz 50 ist bei dieser Vorgehensweise fest vordefiniert und nicht veränderbar, um ein optimales Regelungsergebnis zu erhalten. Nach Ablauf eines Intervalls von 10 Zeiteinheiten 56 ist das Arbeitsumfeld neu erfasst und es kann in den ersten Betriebszustand 44 gewechselt werden bzw. es ist ein Zustand gemäß dem ersten Betriebszustand 44 erreicht, bei dem gleichzeitig der erste Parametersatz 48 aktiviert wird.

Der erste Betriebszustand 44 umfasst einen geregelten Ausbringvorgang bei einer Feldfahrt. Die zentrale Rechner- und Auswerteeinheit 36 wählt anschließend für den ersten Betriebszustand 44 den ersten Parametersatz 48, welcher den Standard-Parametersatz 48 darstellt. Der erste Parametersatz verfügt über die Parameter mit den Werten
- Messintervall: 5 Sekunden,
- Zählverzögerung: 2 Sekunden,
- Aggressivität: 70% und
- zulässige Messwertabweichung: 50%.

Solange die Feldfahrt aufrechterhalten wird, ist der erste Parametersatz 48 aktiv. Hierbei ist ein Messintervall von fünf Sekunden ausreichend, da ein möglichst ruhiges Regelungsverhalten gewünscht wird. Die geeignete Zählverzögerung für den ersten Betriebszustand 44 wird bereits im Vorfeld automatisch von der Rechner- und Auswerteeinheit 36 ermittelt. Die Aggressivität von 70% führt zu einer langsameren Einstellung eines neuen Kalibrierwerts. Die niedrige zulässige Messwertabweichung von 50% bewirkt eine Vermeidung von unzulässig hohen Reglerwerten. Bei dem ersten Parametersatz 48 können die Parameter Aggressivität sowie zulässige Messwertabweichung gegebenenfalls variiert werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Verteilvorrichtung
- 14: Luftfördereinheit
- 16: Luftleitung
- 18: Saatgutvorrat
- 20: Trichter
- 22: Dosiereinheit
- 24: Verteilgut
- 26: Steigleitung
- 28: Verteileinheit
- 30: Verbindungsleitungen
- 32: Sensoreinheit
- 34: Ausgangssignale
- 36: Rechner- und/oder Auswerteinheit, Steuer- und/oder Regeleinheit
- 38: Stellgröße
- 40: Ausgangssignale
- 44: erster Betriebszustand
- 46: zweiter Betriebszustand
- 48: erster Parametersatz
- 50: zweiter Parametersatz
- 52: Parameter 1a, 1b, 1c, 1d
- 54: Parameter 2a, 2b, 2c, 2d
- 56: Einflussfaktoren

## Patentansprüche

1. Verfahren zur Regelung einer Dosiereinheit (22) zur Dosierung von granulatartigem Verteilgut (24), insbesondere von körnigem Saatgut oder Dünger, wobei über wenigstens eine Sensoreinheit (32) wenigstens ein Anteil einer Verteilgutmenge, welcher zu wenigstens einer Ausbringeinrichtung geleitet wird, innerhalb eines bestimmten Messintervalls erfasst wird, über welchen die Gesamtverteilgutmenge ermittelt werden kann, welche die Dosiereinheit (22) innerhalb des Messintervalls ausgibt, wobei die wenigstens eine Sensoreinheit (32) mit einer Rechner- und/oder Auswerteeinheit (36) verbunden ist, mittels welcher eine Regelung und/oder Kalibrierung der Dosiereinheit (22) vorgenommen werden kann, wobei
- die Rechner- und/oder Auswerteeinheit (36) über wenigstens zwei vorgegebene Parametersätze (48, 50) verfügt, welche sich aus jeweils wenigstens einem Parameter (52, 54) zusammensetzen,
- wobei bei einem bestimmten ersten Betriebszustand (44) der erste Parametersatz (48) angewendet wird, welcher ein erstes Messintervall umfasst, und wonach die Regelung der Dosiereinrichtung (22) an den ersten Betriebszustand (44) angepasst wird,
- und wobei bei Erreichen eines bestimmten zweiten Betriebszustands (46) zu dem wenigstens zweiten Parametersatz (50) gewechselt wird, welcher ein zweites Messintervall umfasst, wobei das zweite Messintervall kürzer ist als das erste Messintervall, und wonach die Regelung der Dosiereinrichtung (22) dem zweiten Betriebszustand (46) angepasst wird,
- und wobei nach Ablauf einer bestimmten Intervalllänge und/oder nach
Ablauf einer bestimmten Anzahl an Messintervallen und/oder nach Einsetzen des ersten Betriebszustandes (44) zu dem ersten Parametersatz (48) gewechselt wird,
wobei der erste Betriebszustand (44) durch einen oder mehrere Standardzustände, umfassend eine Feldfahrt, gebildet wird.

2. Verfahren nach Anspruch 1, wobei der zweite Betriebszustand (46) durch wenigstens die Zustände Neustart des Zugfahrzeugs und/oder des Programms und/oder Wechsel des Verteilguts (24) und/oder Wechsel der Dosiereinheit (22) und/oder Arbeitsunterbrechung gebildet wird.

3. Verfahren nach Anspruch 1 oder 2, wobei die Länge des bestimmten Messintervalls anhand einer Zeiteinheit und/oder einer Anzahl an Umdrehungen der Dosiereinheit (22) festgelegt wird.

4. Verfahren nach einem der Ansprüche 1 bis 3, wobei die Länge des bestimmten zweiten Messintervalls eine bestimmte Anzahl an Messintervallen umfasst, nach welchen zu dem ersten Parametersatz (48) gewechselt wird.

5. Verfahren nach einem der Ansprüche 1 bis 4, wobei das bestimmte Messintervall eine Länge von eins bis zehn, insbesondere eins bis fünf Zeiteinheiten und/oder Umdrehungen der Dosiereinheit (22) umfasst.

6. Verfahren nach einem der Ansprüche 1 bis 5, wobei die wenigstens zwei vorgegebenen Parametersätze (48, 50) die Parameter Messintervall und/oder Zählverzögerung und/oder Aggressivität und/oder zulässige Messwertabweichung umfassen.

7. Verfahren nach Anspruch 6, wobei der Parameter Zählverzögerung den Zeitversatz zwischen den Vorgängen Dosierung und Erfassung des wenigstens Anteils der Verteilgutmenge bestimmt.

8. Verfahren nach Anspruch 6, wobei der Parameter Aggressivität das Gewichtungsverhältnis zwischen einem alten Reglerwert und einem neuen Reglerwert bestimmt.

9. Verfahren nach Anspruch 6, wobei der Parameter zulässige Messwertabweichung eine unzulässig hohe Reglerwertabweichung im Vergleich zu den vorhergehenden Messwerten bei einem geringeren Reglerwert abschneidet.

10. Verfahren nach einem der Ansprüche 1 bis 9, wobei der wenigstens zweite Parametersatz (50) fest vordefiniert wird.

11. Verfahren nach einem der Ansprüche 1 bis 10, wobei bei dem ersten Parametersatz (48) die Parameter Messintervall und/oder Zählverzögerung fest vordefiniert werden.

12. Verfahren nach einem der Ansprüche 1 bis 11, wobei bei dem ersten Parametersatz (48) die Parameter Aggressivität und/oder zulässige Messwertabweichung variabel definiert werden können.

13. Dosiereinheit (22) zur Dosierung von granulatartigem Verteilgut (24), insbesondere von Saatgut oder Dünger, wobei wenigstens eine Sensoreinheit (32) wenigstens einen Anteil einer Verteilgutmenge, welcher zu wenigstens einer Ausbringeinrichtung geleitet wird, innerhalb eines bestimmten Messintervalls erfasst, über welchen die Gesamtverteilgutmenge ermittelt werden kann, welche die Dosiereinheit (22) innerhalb des Messintervalls ausgibt, wobei die wenigstens eine Sensoreinheit (32) mit einer Rechner- und/oder Auswerteeinheit (36) verbunden ist, mittels welcher eine Regelung der Dosiereinheit (22) vorgenommen werden kann, wobei die Rechner- und/oder Auswerteeinheit (36) über wenigstens zwei vorgegebene Parametersätze (48, 50) verfügt, welche sich jeweils aus wenigstens einem Parameter zusammen setzen,
- wobei ein bestimmter erster Betriebszustand (44) den ersten Parametersatz (48) anwendet, welcher ein erstes Messintervall umfasst, und wonach sich die Regelung der Dosiereinrichtung (22) dem ersten Betriebszustand (44) anpasst,
- und wobei bei Erreichen eines bestimmten zweiten Betriebszustands (46) zu dem wenigstens zweiten Parametersatz (50) gewechselt wird, welcher ein zweites Messintervall umfasst, wobei das zweite Messintervall kürzer ist als das erste Messintervall, und wonach sich die Regelung der Dosiereinrichtung (22) dem zweiten Betriebszustand (46) anpasst,
- und wobei nach Ablauf einer bestimmten Intervalllänge und/oder Ablauf
einer bestimmten Anzahl an Messzyklen und/oder nach Einsetzen des ersten Betriebszustands (44) der Parametersatz (50) zu dem ersten Parametersatz (48) wechselt,
wobei der erste Betriebszustand (44) durch einen oder mehrere Standardzustände, umfassend eine Feldfahrt, gebildet ist.

14. Dosiereinheit (22) nach Anspruch 13, die zur Durchführung eines Regelungsverfahrens gemäß einem der Ansprüche 1 bis 12 vorgesehen bzw. ausgestattet ist.

## Claims

1. A method to regulate a metering unit (22) used for the metering of granular distribution goods (24), in particular, of granular seeds or fertilisers, wherein at least one portion of an amount of distribution goods being directed to at least one spreading device is recorded by at least sensor unit (32) within a specific measuring interval, via which portion the total amount of distribution goods output by the metering unit (22) within the measuring interval can be determined, wherein the at least one sensor unit (32) is connected to a processing unit and/or analysis unit (36), by which a regulation and/or calibration of the metering unit (22) can be carried out,
- wherein the processing unit and/or analysis unit (36) has at least two specified parameter sets (48, 50), composed in each instance of at least one parameter (52, 54),
- wherein a first parameter set (48) comprising a first measuring interval is applied in a specific first operating mode (44), and whereafter the regulation of the metering device (22) is adapted to the first operating mode (44),
- and wherein the at least one second parameter set (50) comprising a second measuring interval is switched to upon reaching a specific second operating mode (46), wherein the second measuring interval is shorter than the first measuring interval, and whereafter the regulation of the metering device (22) is adapted to the second operating mode (46),
- and wherein the first parameter set (48) is switched to after the lapse of a specific interval length and/or after the lapse of a specific number of measuring intervals and/or after the setting in of the first operating mode (44),
wherein the first operating mode (44) is formed by one or more standard modes, comprising a field drive.

2. The method according to claim 1, wherein the second operating mode (46) is formed by at least the modes restart of the towing vehicle and/or of the program and/or change of the distribution goods (24) and/or change of the metering unit (22) and/or interruption of work.

3. The method according to claim 1 or 2, wherein the length of the specific measuring interval is defined on the basis of a time unit and/or of a number of rotations of the metering unit (22).

4. The method according to one of the claims 1 to 3, wherein the length of the specific second measuring interval comprises a specific number of measuring intervals after which the first parameter set (48) is switched to.

5. The method according to one of the claims 1 to 4, wherein the specific measuring interval comprises a length from one to ten, in particular, from one to five time units and/or rotations of the metering unit (22).

6. The method according to one of the claims 1 to 5, wherein the at least two specified parameter sets (48, 50) comprise the parameters measuring interval and/or counting delay and/or aggressiveness and/or permissible error of measurement.

7. The method according to claim 6, wherein the parameter counting delay determines the time offset between the processes of metering and recording the at least one portion of the amount of distribution goods.

8. The method according to claim 6, wherein the parameter aggressiveness determines the weighting ratio between an old regulator value and a new regulator value.

9. The method according to claim 6, wherein the parameter permissible error of measurement cuts off an in comparison to the previous measured values impermissibly high regulator value deviation at a lower regulator value.

10. The method according to one of the claims 1 to 9, wherein the at least second parameter set (50) is fixedly predefined.

11. The method according to one of the claims 1 to 10, wherein the parameters measuring interval and/or counting delay are fixedly predefined in the first parameter set (48).

12. The method according to one of the claims 1 to 11, wherein the parameters aggressiveness and/or permissible error of measurement can be variably defined in the first parameter set (48).

13. A metering unit (22) used for the metering of granular distribution goods (24), in particular, of seeds or fertilisers, wherein at least one sensor unit (32) records within a specific measuring interval at least one portion of an amount of distribution goods being directed to at least one spreading device, via which portion the total amount of distribution goods output by the metering unit (22) within the measuring interval can be determined, wherein the at least one sensor unit (32) is connected to a processing unit and/or analysis unit (36), by which a regulation of the metering unit (22) can be carried out, wherein
- the processing unit and/or analysis unit (36) has at least two specified parameter sets (48, 50), composed in each instance of at least one parameter,
- wherein a specific first operating mode (44) applies the first parameter set (48) comprising a first measuring interval, and whereafter the regulation of the metering device (22) adapts to the first operating mode (44),
- and wherein the at least second parameter set (50) comprising a second measuring interval is switched to upon reaching a specific second operating mode (46), wherein the second measuring interval is shorter than the first measuring interval, and whereafter the regulation of the metering device (22) adapts to the second operating mode (46),
- and wherein the parameter set (50) switches to the first parameter set (48) after the lapse of a specific interval length and/or after the lapse of a specific number of measuring cycles and/or after the setting in of the first operating mode (44),
wherein the first operating mode (44) is formed by one or more standard modes, comprising a field drive.

14. The metering unit (22) according to claim 13, being provided or, as the case may be, being equipped to carry out a regulation method according to one of the claims 1 to 12.

## Revendications

1. Procédé de réglage d'une unité de dosage (22), destinée à doser du matériau d'épandage sous forme de granulés (24), notamment des semences ou engrais granuleux, au moins une partie d'une quantité de matériau d'épandage amenée à au moins un dispositif d'épandage étant, par le biais d'au moins une unité de détection (32), détectée au sein d'un intervalle de mesure déterminé dans lequel la totalité de la quantité de matériau d'épandage peut être détectée, quantité que donne l'unité de dosage (22) au cours d'un intervalle de mesure, ladite au moins une unité de détection (32) étant connectée à une unité informatique et/ou d'évaluation (36) qui permet d'effectuer un réglage et/ou un calibrage de l'unité de dosage (22),
- ladite unité informatique et/ou d'évaluation (36) disposant d'au moins deux lots de paramètres donnés (48, 50) qui se composent chacun d'au moins un paramètre (52, 54),
- dans un premier état de fonctionnement défini (44), le premier lot de paramètres (48) qui est utilisé étant celui qui comprend un premier intervalle de mesure et après quoi le réglage du dispositif de dosage (22) étant ajusté audit premier état de fonctionnement (44),
- et lorsqu'un deuxième état de fonctionnement (46) défini est atteint, on passe audit au moins un deuxième lot de paramètres (50) qui comprend un deuxième intervalle de mesure, ledit deuxième intervalle de mesure étant plus court que le premier intervalle de mesure, et après quoi le réglage du dispositif de dosage (22) étant ajusté au deuxième état de fonctionnement (46),
- et après une longueur d'intervalle définie et/ou après un nombre défini d'intervalles de mesure et/ou une fois que le premier état de fonctionnement (44) a démarré on passe au premier lot de paramètres (48),
le premier état de fonctionnement (44) étant constitué par un ou plusieurs états standard, comprenant un trajet en champ.

2. Procédé selon la revendication 1, le deuxième état de fonctionnement (46) étant constitué par au moins les états redémarrage du véhicule tracteur et/ou du programme et/ou changement du matériau d'épandage (24) et/ou changement de l'unité de dosage (22) et/ou interruption du travail.

3. Procédé selon la revendication 1 ou 2, la longueur de l'intervalle de mesure défini étant déterminée au moyen d'une unité temporelle et/ou d'un nombre de tours de l'unité de dosage (22).

4. Procédé selon l'une quelconque des revendications 1 à 3, la longueur du deuxième intervalle de mesure défini comprenant un nombre défini d'intervalles de mesure après lesquels on passe au premier lot de paramètres (48).

5. Procédé selon l'une quelconque des revendications 1 à 4, l'intervalle de mesure défini comprenant une longueur de une à dix, notamment de une à cinq unités temporelles et/ou tours de l'unité de dosage (22).

6. Procédé selon l'une quelconque des revendications 1 à 5, lesdits au moins deux lots de paramètres définis (48, 50) comprenant les paramètres intervalle de mesure et/ou retardement de décompte et/ou agressivité et/ou écart valide dans la valeur de mesure.

7. Procédé selon la revendication 6, le paramètre retardement de décompte déterminant le décalage temporel entre les opérations dosage et détection de ladite au moins une partie de la quantité de matériau d'épandage.

8. Procédé selon la revendication 6, le paramètre agressivité déterminant le rapport de pondération entre une ancienne valeur de réglage et une nouvelle valeur de réglage.

9. Procédé selon la revendication 6, le paramètre écart valide dans la valeur de mesure coupant, à une valeur de réglage réduite, un écart élevé non valide dans la valeur de réglage par rapport aux valeurs de mesure précédentes.

10. Procédé selon l'une quelconque des revendications 1 à 9, ledit au moins deuxième lot de paramètres (50) étant fixé au préalable.

11. Procédé selon l'une quelconque des revendications 1 à 10, dans le premier lot de paramètres (48) les paramètres intervalle de mesure et/ou retardement de décompte étant fixés au préalable.

12. Procédé selon l'une quelconque des revendications 1 à 11, dans le premier lot de paramètres (48) les paramètres agressivité et/ou écart valide dans la valeur de mesure pouvant être définis de manière variable.

13. Unité de dosage (22) destinée à doser du matériau d'épandage sous forme de granulés (24), notamment des semences ou engrais, au moins une unité de détection (32) détectant au moins une partie d'une quantité de matériau d'épandage qui est amenée à au moins un dispositif d'épandage, et ce au sein d'un intervalle de mesure déterminé dans lequel la totalité de la quantité de matériau d'épandage peut être détectée, quantité que donne l'unité de dosage (22) au cours de l'intervalle de mesure, ladite au moins une unité de détection (32) étant connectée à une unité informatique et/ou d'évaluation (36) qui permet d'effectuer un réglage de l'unité de dosage (22),
- ladite unité informatique et/ou d'évaluation (36) disposant d'au moins deux lots de paramètres donnés (48, 50) qui se composent chacun d'au moins un paramètre,
- un premier état de fonctionnement défini (44) utilisant le premier lot de paramètres (48) qui comprend un premier intervalle de mesure et après quoi le réglage du dispositif de dosage (22) s'ajustant audit premier état de fonctionnement (44),
- et lorsqu'un deuxième état de fonctionnement (46) défini est atteint, on passe audit au moins deuxième lot de paramètres (50) qui comprend un deuxième intervalle de mesure, ledit deuxième intervalle de mesure étant plus court que le premier intervalle de mesure, et après quoi le réglage du dispositif de dosage (22) s'ajustant audit deuxième état de fonctionnement (46),
- et après une longueur d'intervalle définie et/ou après un nombre défini de cycles de mesure et/ou une fois que le premier état de fonctionnement (44) a démarré, le lot de paramètres (50) passe au premier lot de paramètres (48),
le premier état de fonctionnement (44) étant constitué par un ou plusieurs états standard, comprenant un trajet en champ.

14. Unité de dosage (22) selon la revendication 13, qui est prévue ou équipée pour l'exécution d'un procédé de réglage selon l'une quelconque des revendications 1 à 12.
